# EUROPEAN PATENT APPLICATION

(11) **EP 4 819 311 A1**
(43) Date of publication of application: **07.10.2026**
(21) Application number: 24869440.8
(22) Date of filing: 04.03.2024
(51) Int. Cl.: H01M 50/103, H01M 50/15, H01M 50/567, H01M 50/169, H01M 50/566, H01M 50/342, H01M 50/593

(54) **CAN, SECONDARY BATTERY INCLUDING SAME, AND METHOD FOR MANUFACTURING SECONDARY BATTERY INCLUDING SAME**

(30) Priority: 29.11.2023 KR 20230169712
(71) Applicant: Samsung SDI Co., Ltd., Yongin-si, Gyeonggi-do 17084 (KR)
(72) Inventor: KIM, Keeyun, Yongin-si, Gyeonggi-do 17084 (KR)
(74) Representative: Gulde & Partner
(86) International application number: PCT/KR2024/002754
(87) International publication number: WO 2025/116133

(57) **Abstract**

Embodiments of the present disclosure are related to a can including a first surface including a long side extended in a first direction, a second surface facing the first surface and including a long side extended in the first direction, a third surface perpendicular to the first surface and connected to a long side of the first surface and a long side of the second surface, a fourth surface facing the third surface and connected to the long side of the first surface and the long side of the second surface, a fifth surface connected to respective short sides of the first surface, the second surface, the third surface, and the fourth surface, an opening facing the fifth surface, and a first hole formed on the fifth surface, wherein the first surface, the second surface, the third surface, the fourth surface, and the fifth surface are integrally formed.

## Description

### BACKGROUND

### Technical Field

The present disclosure relates to a can, a secondary battery including the same, and a manufacturing method of a secondary battery including the same, and more particularly, to a can used for a secondary battery, a secondary battery including the same, and a manufacturing method of a secondary battery including the same.

### Description of Related Art

A secondary battery is a chargeable battery, which is charged and discharged multiple times. The secondary batteries are mainly used in various application fields such as electronics (smartphones, laptops, tablets, etc.), electric vehicles, solar power generation, and emergency power supplies. Particularly, a lithium-ion battery has a high energy density and a high charge/discharge efficiency to be used in various electronics and electric vehicles.

A secondary battery may have various types such as a cylindrical secondary battery, a prismatic secondary battery, and a pouch-type secondary battery according to the shape of a case. The prismatic secondary battery has a structure in which an electrode assembly is built in a prismatic metal can. The electrode assembly is inserted into the prismatic metal can, and a cap plate is welded to seal the can. Welding defects may occur between a can and a cap plate, which may increase the difficulty of the manufacturing process.

The above information disclosed in this Background section is for the enhancement of understanding of the background of the present disclosure, and therefore, it may contain information that does not constitute related (or prior) art.

### SUMMARY

The present disclosure aims to provide a can, a secondary battery, and a manufacturing method of a secondary battery to solve the above-described problem.

However, the technical problem to be solved by the present disclosure is not limited to the above problem, and other problems not mentioned herein, and aspects and features of the present disclosure that would address such problems will be clearly understood by those skilled in the art from the description of the present disclosure below.

According to embodiments of the present disclosure, there is provided a can including a first surface including a long side extended in a first direction, a second surface facing the first surface and including a long side extended in the first direction, a third surface perpendicular to the first surface and connected to a long side of the first surface and a long side of the second surface, a fourth surface facing the third surface and connected to the long side of the first surface and the long side of the second surface;, a fifth surface connected to respective short sides of the first surface, the second surface, the third surface, and the fourth surface, an opening facing the fifth surface, and a first hole formed on the fifth surface, wherein the first surface, the second surface, the third surface, the fourth surface, and the fifth surface are integrally formed.

The case may further include a vent member formed on the first surface.

The case may further include a cap plate coupled to the first opening, wherein the cap plate includes a second hole.

The first surface, the second surface, the third surface, the fourth surface, and the fifth surface may be formed by using a deep drawing process.

According to embodiments of the present disclosure, there is provided a secondary battery including a can including a first surface, a second surface, a third surface, a fourth surface, and a fifth surface with short sides and long sides respectively, a fifth surface connected to respective short sides of the first surface, the second surface, the third surface, and the fourth surface, and an opening opposite to the fifth surface, a first hole formed on the fifth surface, a first insulating member and a first terminal plate coupled to the first hole, an electrode assembly placed in the can and connected to the first terminal plate, a cap plate coupled to the opening, and a second terminal plate connected to the electrode assembly and coupled onto the cap plate, wherein the first surface, the second surface, the third surface, the fourth surface, and the fifth surface are integrally formed.

The can may be formed by using a deep drawing process.

The secondary battery may further include a rivet coupled to the first hole, wherein the rivet is rivet-coupled to the first insulating member and the first terminal plate.

The secondary battery may further include a sub-plate assembly placed on one end of the electrode assembly, wherein the electrode assembly is connected to the first terminal plate through the sub-plate assembly.

The sub-plate assembly may include a sub-plate, and a current collector coupled onto the sub-plate, wherein the current collector includes a protrusion contacting the first terminal plate.

According to embodiments of the present disclosure, there is provided a manufacturing method of a secondary battery, the method including forming integrally a can including a first surface, a second surface, a third surface, and a fourth surface with short sides and long sides respectively, a fifth surface connected to respective short sides of the first surface, the second surface, the third surface, and the fourth surface, and an opening opposite to the fifth surface, forming a first hole on the fifth surface, and assembling a first insulating member and a first terminal plate on the first hole.

The first surface and the second surface may face each other, wherein the third surface and the fourth surface face each other, and wherein a length of a short side of the first surface is smaller than a length of a short side of the third surface.

The method may further include forming a vent hole on the first surface.

The forming of the vent hole may be performed before the forming of the first hole.

The method may further include inserting an electrode assembly into the can.

The method may further include a sub-plate assembly placed on one end of the electrode assembly and connected to the first terminal plate.

The method may further include coupling a cap assembly to the opening of the can.

The cap assembly may include a cap plate coupled to the opening, a second insulating member and a second terminal plate assembled onto the cap plate.

The can may be formed by a deep drawing process.

The assembling of the first insulating member and the first terminal plate to the first hole may include placing a rivet on the first hole, rivet-coupling the rivet to the first insulating member, and rivet-coupling the rivet to the first terminal plate.

The first terminal plate and the sub-plate assembly are coupled by welding.

According to embodiments of the present disclosure, a can including first to fifth surfaces may be integrally formed to reduce welding defects between the can and a cap plate.

According to embodiments of the present disclosure, a can including first to fifth surfaces may be integrally formed to streamline the process steps for manufacturing a secondary battery and reduce the difficulty of the process.

According to embodiments of the present disclosure, a can including first to fifth surfaces may be formed integrally to reduce the production cost of a secondary battery.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating a secondary battery according to embodiments of the present disclosure;
FIG. 2 is an exploded perspective view illustrating a secondary battery according to embodiments of the present disclosure;
FIG. 3 is a view illustrated to explain a manufacturing method of a secondary battery according to embodiments of the present disclosure;
FIG. 4 to FIG. 8 are views illustrated to explain a manufacturing method of a secondary battery according to embodiments of the present disclosure by using the can described in FIG. 3;
FIG. 9 is a flow chart illustrated to explain a manufacturing method of a secondary battery according to one embodiment of the present disclosure; and
FIG. 10 to FIG. 12 are views illustrated to explain a manufacturing method of a secondary battery according to another embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

Also, it will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, in the figures, dimensions of the various elements, layers, etc. may be exaggerated for clarity of illustration. The same reference numerals designate the same elements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

The terms such as "first" and "second" are used to describe various elements, but the elements are not limited to those terms. The terms are used simply to distinguish one element from other elements. Unless otherwise specifically stated, the first element may also be the second element.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components". When an element is referred to as being "electrically coupled" to another element, it may be directly connected or coupled to another element or be indirectly connected or coupled to another element with one or more intervening elements interposed therebetween.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

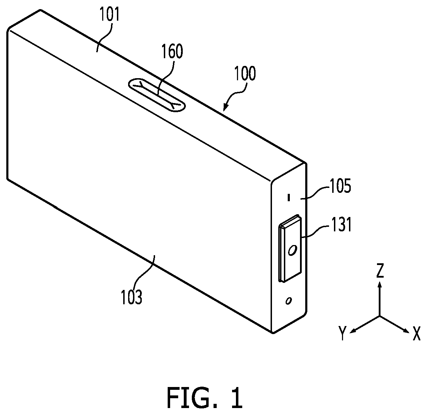

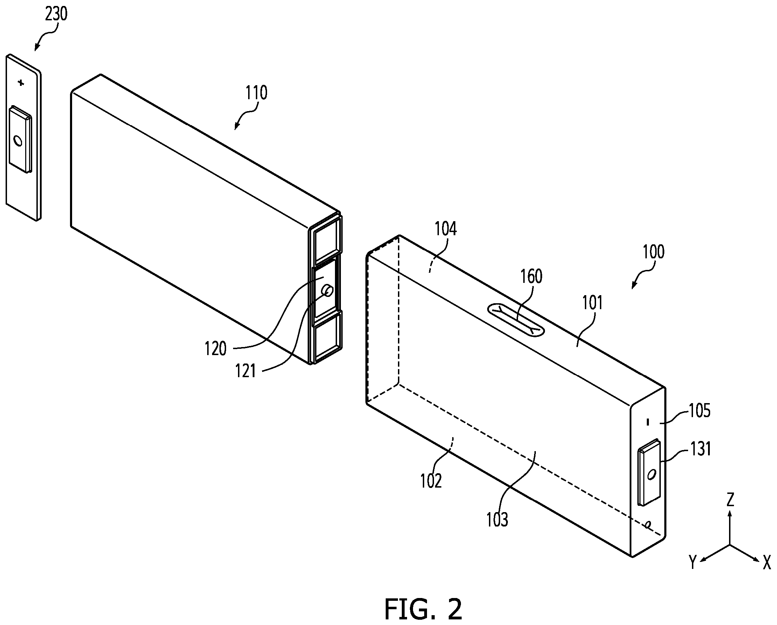

FIG. 1 is a perspective view illustrating a secondary battery according to embodiments of the present disclosure, and FIG. 2 is an exploded perspective view illustrating a secondary battery according to embodiments of the present disclosure.

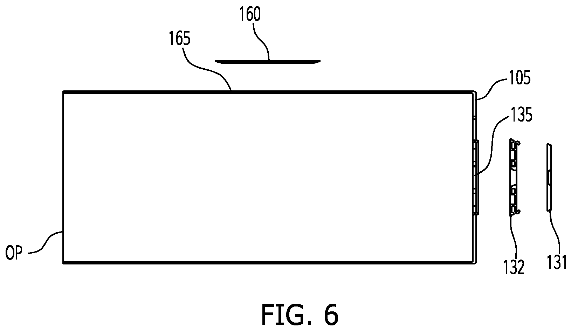

Referring to FIG. 1 and FIG. 2, a secondary battery may include a can 100, an electrode assembly 110, a vent member 160, a first terminal plate 131, a first insulating member 132 (referring to FIG. 6), and a cap assembly 230.

The electrode assembly 110 may be accommodated inside the can 100. Although not shown, the electrode assembly 110 may include a first electrode plate, a second electrode plate, a separator, etc. The first electrode plate, the second electrode plate, and the separator each may be formed in a thin plate shape or a thin film shape. The electrode assembly 110 may include a structure in which the first electrode plate, the separator, and the second electrode plate are sequentially stacked and wound, or repeatedly stacked. When the electrode assembly 110 includes a wound stacked body, a winding axis may be a first direction (X-axis). The first direction X-axis may be a longitudinal direction of the can 100.

The first electrode plate may function as a cathode. The first electrode plate may include a cathode-coated portion in which a cathode active material is coated on a conductive metal thin plate made of copper, a copper alloy, nickel, or a nickel alloy, and a cathode-uncoated portion in which the cathode active material is not coated. The cathode active material may include, for example, a carbon-based material, silicon, etc. However, the present invention is not limited thereto.

The second electrode plate may function as an anode. The second electrode plate may include a anode-coated portion in which an anode active material is coated on a conductive metal thin plate including aluminum, etc., and an anode-uncoated portion in which the anode active material is not coated. The anode active material may include, for example, lithium cobalt oxide, etc. However, the composition of anode active materials according to the present disclosure is not limited thereto.

The separator may be interposed between the first electrode plate and the second electrode plate. The separator may prevent an electrical short circuit between the first electrode plate and the second electrode plate. The separator may include, for example, polyethylene, polypropylene, a porous hollow polymer of polyethylene and polypropylene, etc. However, the composition of the separator according to the present disclosure is not limited thereto.

A first sub-plate assembly 120 may be disposed on one side of the electrode assembly 110. The first sub-plate assembly 120 may be electrically connected to the first electrode plate (e.g., a cathode electrode plate) of the electrode assembly 110. The first sub-plate assembly 120 may be electrically connected to a first terminal plate 131 described below. The electrode assembly 110 may be electrically connected to the first terminal plate 131 through the first sub-plate assembly 120.

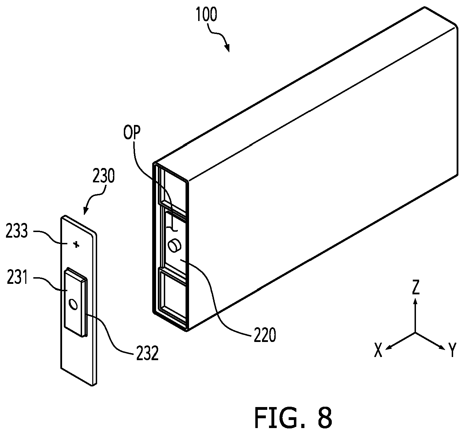

A second sub-plate assembly 220 (referring to FIG. 8) may be disposed on the other end of the electrode assembly 110. The first sub-plate assembly 120 and the second sub-plate assembly 220 may be placed on the ends of the electrode assembly 110, respectively. The second sub-plate assembly 220 will be described in FIG. 8.

According to embodiments, the first sub-plate assembly 120 may include a sub-plate, and a current collector. The sub-plate may be connected to a tab formed in the anode-coated portion. The current collector may be disposed on the sub-plate. The current collector may include a protrusion 121. The protrusion 121 of the current collector may contact the first terminal plate 131.

The can 100 may accommodate an electrolyte and the electrode assembly 110. The can 100 may include a first surface 101, a second surface 102, a third surface 103, a fourth surface 104, a fifth surface 105 and an opening OP. The external shape of the can 100 will be described in detail.

The first side 101 may include a long side extended in a first direction (X-axis) and a short side extended in a second direction (Y-axis). The first side 101 may have a rectangular shape. The first direction X-axis may be a longitudinal direction of the can 100. The first direction X-axis may be perpendicular to the second direction Y-axis.

The second surface 102 may include a long side extended in the first direction X-axis, and a short side extended in a second direction Y-axis. The second surface 102 may have a rectangular shape. The second surface 102 may face the first surface 101. The second surface 102 may face the first surface 101 in a third direction (Z-axis). The third direction Z-axis may be perpendicular to the first direction X-axis and the second direction Y-axis.

The length of the long side of the first surface 101 and the length of the long side of the second surface 102 may be the same. The length of the short side of the first surface 101 and the length of the short side of the second surface 102 may be the same. The shapes of the first surface 101 and the second surface 102 may be the same.

The third surface 103 may include a long side extended in the first direction (X-axis) and a short side extended in the third direction (Z-axis). The third surface 103 may have a rectangular shape. The third surface 103 may be connected to each of the long side of the first side 101 and the long side of the second surface 102. The long side of the third surface 103 may be connected to the long side of the first surface 101, and the long side of the third surface 103 may be connected to the long side of the second surface 102. The length of the short side of the third surface 103 may be greater than the length of the short side of the first surface 101.

The fourth surface 104 may include a long side extended in the first direction (X-axis) and a short side extended in the third direction (Z-axis). The fourth surface 104 may have a rectangular shape. The fourth surface 104 may face the third surface 103. Specifically, the fourth surface 104 may face the third surface 103 in the second direction (Y-axis). The fourth surface 104 may be connected to each of the long side of the first surface 101 and the long side of the second surface 102. One of the long sides of the fourth surface 104 may be connected to the long side of the first surface 101, and the other one of the long sides of the fourth surface 104 may be connected to the long side of the second surface 102. The length of the short side of the fourth surface 104 may be greater than the length of the short side of the first surface 101.

The fifth surface 105 may include a long side extended in the third direction (Z-axis) and a short side extended in the second direction (Y-axis). The fifth surface 105 may have a rectangular shape. The fifth surface 105 may be connected to the respective short sides of the first surface, the second surface, the third surface, and the fourth surface 101, 102, 103, and 104. Specifically, the long side of the fifth surface 105 may be connected to the short side of the third surface 103 and the short side of the fourth surface 104. The short side of the fifth surface 105 may be connected to the short side of the first surface 101 and the short side of the second surface 102. The fifth surface 105 may cover one side of the electrode assembly 110. For example, the fifth surface 105 may cover the first sub-plate assembly 120.

The opening OP may be opposite to the fifth surface 105. Specifically, the opening OP may face the fifth surface 105 in the first direction (X-axis). The opening OP may be defined as a structure formed by the respective short sides of the first surface, the second surface, the third surface, and the fourth surface 101, 102, 103 and 104. The opening OP may be a passage into which the electrode assembly 110 is inserted.

The first surface 101 and the second surface 102 may cover a surface formed in a + Z-axis direction and a - Z-axis direction of the electrode assembly 110, the third surface 103 and the fourth surface 104 may cover a surface formed in a + Y-axis direction and a - Y-axis direction of the electrode assembly 110. The fifth surface 105 may cover a surface formed in the + X-axis direction of the electrode assembly 110. The first surface, the second surface, the third surface and the fourth surfaces 101, 102, 103 and 104 may surround the electrode assembly 110 in the second direction (Y-axis) and the third direction (Z-axis), and the fifth surface 105 may be coupled to the first surface, the second surface, the third surface and the fourth surfaces 101, 102, 103 and 104 to seal one end of the can 100. The can 100 may have a rectangular prism shape with one end open and the other end closed.

The first surface, the second surface, the third surface, the fourth surface, and the fifth surface of the can 100 may be integrally formed. The first surface, the second surface, the third surface, the fourth surface, and the fifth surface of the can 100 may be integrally formed by the deep drawing process.

The deep drawing process is a process of manufacturing containers with a bottom but with no seams by pressing the outer periphery of the plate inward by using a punch and dies.

The can 100 may include conductive metals such as aluminum, aluminum alloy, stainless steel, and nickel-plated steel.

The first terminal plate 131 may contact the first sub-plate assembly 120. The first terminal plate 131 may be electrically connected to the electrode assembly 110 through the first-sub plate assembly 120.

The cap assembly 230 may be coupled to the opening OP of the can 100. The cap assembly 230 may be placed on the opening OP, and welded along the opening OP to seal the can 100. Referring to FIG. 2, the cap assembly 230 is illustrated as being placed to be spaced apart from the electrode assembly 110, but it is only for illustrating the structure of the cap assembly 230, but the present disclosure is not limited thereto.

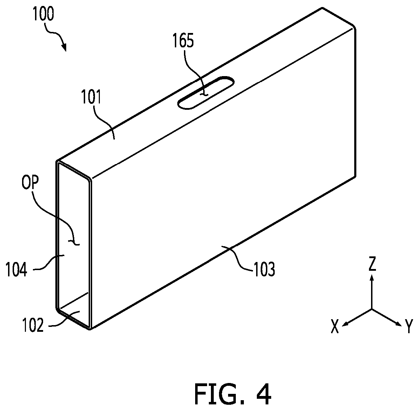

A vent member 160 may be placed on the first surface 101 of the can 100. A vent hole 165 (referring to FIG. 4) may be formed on the first surface 101 of the can 100, and the vent member 160 may be coupled to the vent hole 165.

The vent member 160 may be open when the internal pressure of the secondary battery exceeds a predetermined threshold pressure. The vent member 160 may prevent an explosion of the secondary battery or a chain heating reaction of one secondary battery and another secondary battery placed nearby.

According to embodiments, the vent member 160 may include a notch. The notch may be formed by removing a portion from the first surface 101 by a predetermined thickness or may be at least one groove. The notch may be ruptured when the internal pressure of the can 100 exceeds a threshold pressure.

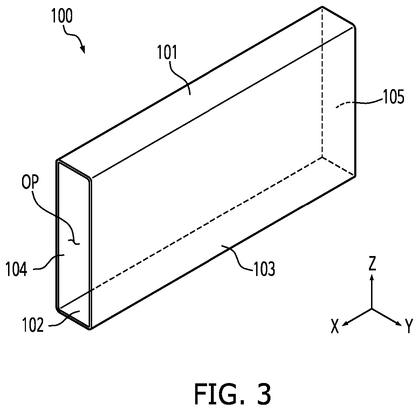

FIG. 3 is a view illustrated to explain a manufacturing method of a secondary battery according to embodiments of the present disclosure.

Referring to FIG. 3, the can 100 used in the secondary battery may be formed. The can 100 may be formed, for example, by using the deep drawing process. The can 100 may have a rectangular prism shape with one end closed and the other end open. The description of FIG. 100 will be the same the description in FIG. 1 and FIG. 2.

The can 100 may include the first surface 101, the second surface 102, the third surface 103, the fourth surface 104, the fifth surface 105 and the opening OP. The first surface 101, the second surface 102, the third surface 103, the fourth surface 104, the fifth surface 105 and the opening OP may be integrally formed because the can 100 is formed by using the deep drawing process. Accordingly, the manufacturing process steps of the secondary battery may be streamlined, and the manufacturing costs may be reduced.

Conventional secondary batteries according to prior arts may be formed by manufacturing a can including openings on both sides and welding a cap plate to each of the openings. In the manufacturing process of the secondary battery, alignment errors may occur because an electrode assembly is inserted into the inside of a can and a cap plate is welded to the can. Specifically, when the cap plate is coupled onto the electrode assembly, the electrode assembly may shift downward due to gravity. Accordingly, welding defects may occur between the cap plate connected to the electrode assembly and the can, which may not properly seal the can.

According to embodiments of the present disclosure, the short sides of the first surface 101, the second surface 102, the third surface 103, and the fourth surface 104 of the can 100 may be connected to the fifth surface 105. The first surface 101, the second surface 102, the third surface 103, the fourth surface 104, and the fifth surface 105 may be integrally formed. The fifth surface 105 may seal one end of both sides of the can 100. Therefore, the process of welding the cap plate 233 to one end of the both ends of the can 100 may not be necessary, and the can 100 may be sealed by welding the cap plate 233 to the opening OP corresponding to the other end of the can 100.

Welding defects may not occur because welding between the can 100 and the fifth side 105 is not required according to embodiments of the present disclosure, thereby reducing the difficulty of the process. In addition, the process step of welding the can 100 and the fifth surface 105 may be omitted, which streamlines the process steps, and reduces product costs.

FIG. 4 to FIG. 8 are views illustrated to explain a manufacturing method of a secondary battery according to embodiments of the present disclosure by using the can described in FIG. 3.

Referring to FIG. 4, the can 100 formed by using the deep drawing process illustrated in FIG. 3 may be provided. According to embodiments, the vent hole 165 may be formed on the first surface 101 of the can 100. The vent hole 165 may have a shape corresponding to the vent member 160. Additionally, the vent hole 165 may be formed on the second surface 102 of the can 100. The vent hole 165 may not be formed on the first surface 101, but may be formed on the second surface 102 of the can 100.

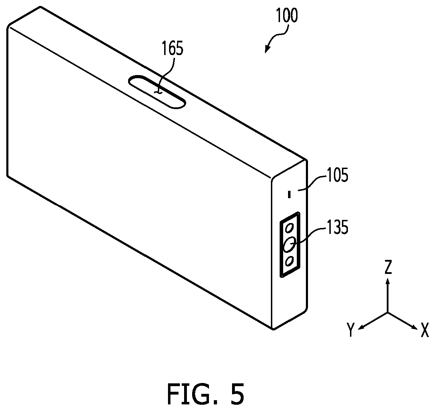

Referring to FIG. 5, a first hole 135 may be formed on the fifth surface 105 of the can 100. According to embodiments, the first hole 135 may include a single hole, or a plurality of holes as illustrated in FIG. 5. The plurality of holes may have shapes that allow a first insulating member 132 (referring to FIG. 6) described below to be coupled.

It is described that the vent hole 165 may be formed on the first surface 101 of the can 100, and then the first hole 135 may be formed on the fifth surface 105 of the can 100, but the present disclosure is not limited thereto. For example, the first hole 135 may be formed on the fifth surface 105 of the can 100, and then the vent hole 165 may be formed on the first surface 101 of the can 100. For another example, the vent hole 165 may be formed on the first surface 101 of the can 100, and the first hole 135 may be formed on the fifth surface 105 of the can 100 simultaneously.

Referring to FIG. 6, a vent member 160, a first insulating member 132, and a first terminal plate 131 may be assembled on the can 100. FIG. 6 is a cross-sectional view illustrating the can 100 cut long a virtual plane formed by X-axis and Y-axis.

The vent member 160 may be coupled onto the vent hole 165. The vent member 160 may include a notch. The description of the vent member 160 and the notch is the same as the description in FIG. 1 and FIG. 2.

The first hole 135 may be formed on the fifth surface 105. The first insulating member 132 may be coupled onto the first hole 135. The first terminal plate 131 may be coupled onto the first insulating member 132. The first insulating member 132 may seal between the fifth surface 105 and the first terminal plate 131. The first insulating member 132 may include an insulating material. Insulation between the fifth surface 105 and the first terminal plate 131 may be achieved by the first insulating member 132.

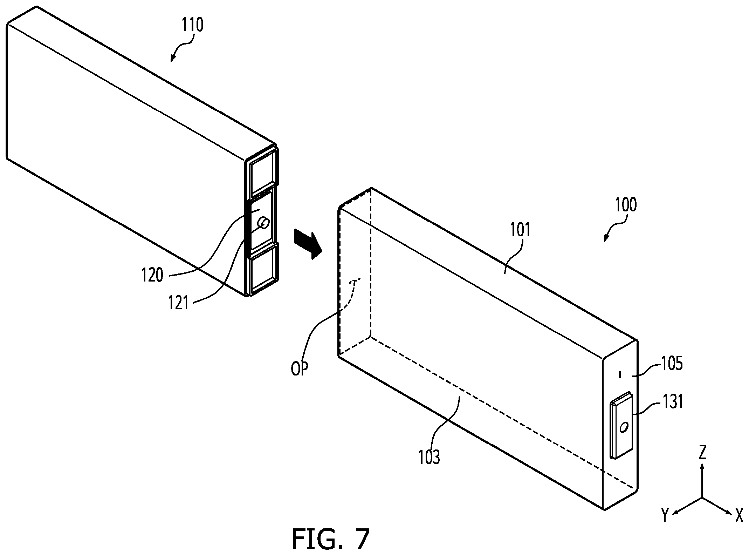

Referring to FIG. 7, the electrode assembly 110 may be inserted into the inside of the can 100.

The electrode assembly 110 may include a first electrode plate, a second electrode plate, a separator, etc. The electrode assembly 110 may be provided with the first sub-plate assembly 120 coupled to one end and a second sub-plate assembly 220 (referring to FIG. 8) coupled to the other end. The electrode assembly 110 may be inserted through the opening OP of the can 100 in the first direction (X-axis). The electrode assembly 110 may be inserted to allow the first sub-plate assembly 120 to contact the first terminal plate 131. According to embodiments, the first sub-plate assembly 120 and the first terminal plate 131 may be connected to each other by welding. However, the present disclosure is not limited thereto. The first sub-plate assembly 120 and the first terminal plate 131 may be welded after a cap assembly 230 described below is coupled.

Referring to FIG. 8, a cap assembly 230 may be coupled to the opening OP.

The cap assembly 230 may include a cap plate 233, a second insulating member 232, and a second terminal plate 231.

The cap plate 233 may be welded and coupled to the opening OP of the can 100. The cap plate 233 may seal one end of the can 100. The cap plate 233 may have a square plate shape. The cap plate 233 may include a second hole. The second insulating member 232 may be coupled onto the second hole. The second terminal plate 231 may be coupled onto the second insulating member 232. The second insulating member 232 may seal between the cap plate 233 and the second terminal plate 231. Insulation between the cap plate 233 and the second terminal plate 231 may be achieved by the second insulating member 232.

The second terminal plate 231 may contact the second sub-plate assembly 220. The second terminal plate 231 may be electrically connected to the electrode assembly 110 through the second sub-plate assembly 220.

The second sub-plate assembly 220 may be electrically connected to a second electrode plate (e.g., an anode electrode plate) of the electrode assembly 110 (referring to FIG. 7). The second sub-plate assembly 220 may be electrically connected to the second terminal plate 231. The electrode assembly 110 may be electrically connected to the second terminal plate 231 through the second sub-plate assembly 220.

The cap plate 233 may include a second hole. The second hole is not shown in FIG. 8, but may be formed on the cap plate 233 with the same shape, number, and position of the first hole 135 (referring to FIG. 5.) The second hole may include a single hole, or a plurality of holes. The shape of the cap plate 233 may be the same as that of fifth surface 105 (referring to FIG. 5) of the can 100. The second insulating member 232 may be coupled onto the second hole. The second insulating member 232 may be coupled to the second hole. The second insulating member 232 may include an insulating material. The second terminal plate 231 may be coupled onto the second insulating member 232 to form the cap assembly 230.

The cap assembly 230 may be coupled to the opening OP of the can 100 by welding. The cap plate 233 of the cap assembly 230 may be disposed on the opening OP of the can 100, and welded to the first surface, the second surface, the third surface, and the fourth surface 101, 102, 103, and 104 (referring to FIG. 2). The cap assembly 230 may be welded to the can 100 to seal the can 100.

The second-sub plate assembly 220 and the cap assembly 230 may be coupled. The second sub-plate assembly 220 and the second terminal plate 231 may be coupled by welding.

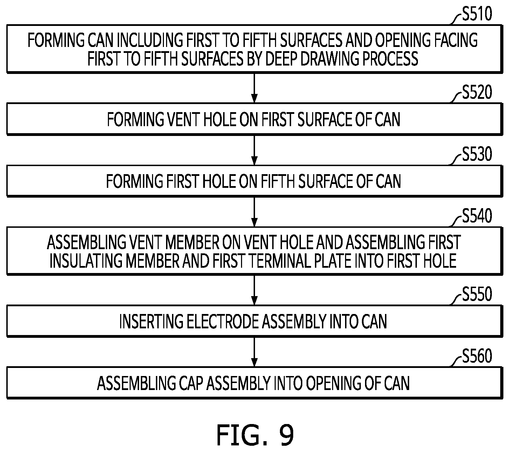

FIG. 9 is a flowchart to explain a manufacturing method of a secondary battery according to embodiments of the present disclosure.

The manufacturing method of the secondary battery according to embodiments of the present disclosure may be initiated by forming a cap using the deep-drawing process in step S510. The can may be integrally formed including a first surface to a fourth surface respectively having short sides and long sides, a fifth surface connected to the respective short sides of the first to fourth surfaces, and an opening opposite to the fifth surface.

A vent hole may be formed on the first surface of the can in step S520. A first hole may be formed on the fifth surface in step S530, a vent member may be assembled to the vent hole, and a first insulating member and a first terminal plate may be assembled to the first hole in step S540.

An electrode assembly may be inserted into the can in step S550. The electrode assembly may be provided with a first sub-plate assembly and a second sub-plate assembly coupled to respective sides. After the electrode assembly is inserted into the can, the first sub-plate assembly and the first terminal plate may be electrically connected by welding.

A cap assembly may be assembled into the opening of the can in step S560. The cap assembly may be provided with a second insulating member and a second terminal plate coupled on the cap plate. The cap assembly may be placed on the opening of the can and coupled to the respective short sides of the first to fourth sides of the can by welding. The second sub-plate assembly and the second terminal plate may be electrically connected by welding to manufacture a secondary battery.

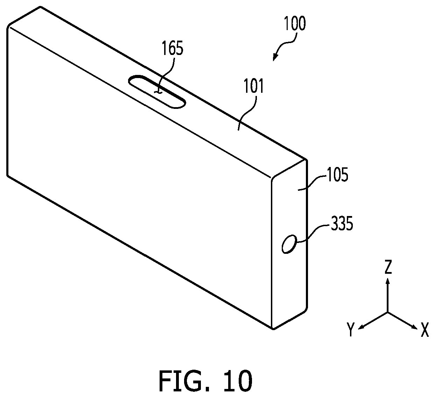

FIG. 10 to FIG. 12 are views illustrated to explain a manufacturing method of a secondary battery according to another embodiment. FIG. 10 is a view illustrated to explain a manufacturing method of a secondary battery after FIG. 4. For convenience of explanation, the description below will focus on the different features from those in FIG. 5 to FIG. 9.

Referring to FIG. 4 to FIG. 10, a third hole 335 may be formed on the fifth surface 105 of the can 100. Unlike in FIG. 5, the third hole 335 may include a single hole. The third hole 335 may have a size corresponding to a rivet to be described below.

The vent hole 165 may be formed on the first surface 101 of the can 100, and then the third hole 335 may be formed on the fifth surface 105 of the can 100. The third hole 335 may be formed on the fifth surface 105 of the can 100, and then the vent hole 165 may be formed on the first surface 101 of the can 100. For another example, the vent hole 165 may be formed on the first surface 101 of the can 100, and the third hole 335 may be formed on the fifth surface 105 of the can 100 simultaneously.

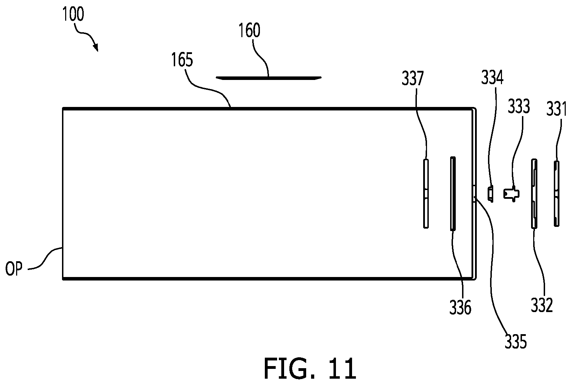

Referring to FIG. 11, a vent member 160, a third terminal plate 331, an upper insulating member 332, a rivet 333, a gasket 334, a lower insulating member 336, and a current collector 337 may be assembled to the can 100. For reference, FIG. 11 corresponds to a cross-sectional view cut along a virtual plane formed by the X-axis and the Z-axis.

The vent member 160 may be coupled onto the vent hole 165. The vent member 160 may include a notch. The description of the vent member 160 and the notch is the same as the description in FIG. 1 and FIG. 2.

The rivet 333 may be coupled onto the third hole 335. The rivet 333 may penetrate the third hole 335. The gasket 334 may be coupled onto the rivet 333 to seal the third hole 335. The gasket 334 may block the gas generated inside the secondary battery from being discharged to the outside.

The upper insulating member 332 may be riveting-coupled to the rivet 333 to the outer side of the can 100. The third terminal plate 331 may be rivet-coupled to the rivet 333 on the upper insulating member 332. The upper insulating member 332 may be arranged between the fifth side 105 (referring to FIG. 10) of the can 100 and the third terminal plate 331. The can 100 and the third terminal plate 331 may be insulated by the upper insulating member 332. The third terminal plate 331 may be electrically connected to the rivet 333.

The lower insulating member 336 may be riveting-coupled to the rivet 333 to the inner side of the can 100. The current collector 337 may be riveting-coupled to the rivet 333 on the lower insulating member 336. The lower insulating member 336 may be placed between the current collector 337 and the fifth side 105 (referring to FIG. 10) of the can 100. The can 100 and the current collector 337 may be insulated by the lower insulating member 336. The current collector 337 may be electrically connected to the rivet 333.

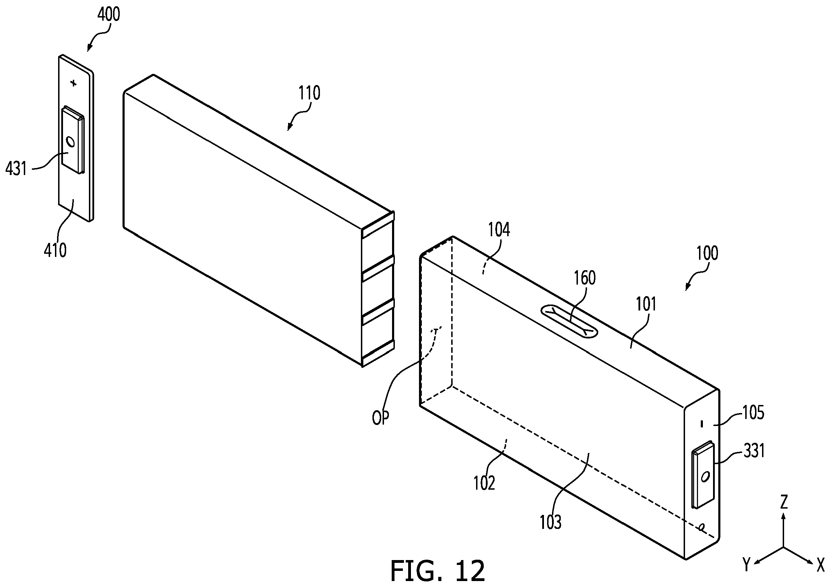

Referring to FIG. 12, the electrode assembly 110 may be inserted into the can 100, and the cap assembly 400 may be coupled onto the opening OP of the can 100.

The electrode assembly 110 may include a first electrode plate, a second electrode plate, a separator, etc. The electrode assembly 110 may be coupled to the current collector 337 (referring to FIG. 11). The first electrode plate of the electrode assembly 110 may be electrically connected to the third terminal plate 331 through the current collector 337.

A cap assembly 400 may be coupled to the opening OP of the can 100. The cap assembly 400 may include a cap plate 410, a fourth terminal plate 431, a rivet, a gasket, an upper insulating member, a lower insulating member, and a current collector.

The description of the components of the cap assembly 400 may be substantially the same as those of the rivet 333, the gasket 334, the upper insulating member 332, the lower insulating member 336, the current collector 337 described in FIG. 11. For convenience of explanation, the description below will focus on the different features from FIG. 11.

The shape of the cap plate 410 may be the same as the fifth surface 105 (referring to FIG. 10) of the can 100. The cap plate 410 may include a fourth hole. The description of the fourth hole is the same as that of the third hole 335 (referring to FIG. 11).

The cap assembly 400 may be coupled to the opening OP of the can by welding. The cap plate 410 of the cap assembly 400 may be placed on the opening OP of the can 100, and welded to respective short sides of the first surface, the second surface, the third surface, and the fourth surface 101, 102, 103, and 104. The cap assembly 400 may be welded to the can 100 to seal the can 100. The second electrode plate of the electrode assembly 110 may be electrically coupled to the fourth terminal plate 431 through the current collector of the cap assembly 400.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A can, comprising:
a first surface including a long side extended in a first direction;
a second surface facing the first surface and including a long side extended in the first direction;
a third surface perpendicular to the first surface and connected to a long side of the first surface and a long side of the second surface;
a fourth surface facing the third surface and connected to the long side of the first surface and the long side of the second surface;
a fifth surface connected to respective short sides of the first surface, the second surface, the third surface, and the fourth surface;
an opening facing the fifth surface; and
a first hole formed on the fifth surface,
wherein the first surface, the second surface, the third surface, the fourth surface, and the fifth surface are integrally formed.

2. The can as claimed in claim 1, further comprising a vent member formed on the first surface.

3. The can as claimed in claim 1, further comprising a cap plate coupled to the first opening, wherein the cap plate includes a second hole.

4. The can as claimed in claim 1, wherein the first surface, the second surface, the third surface, the fourth surface, and the fifth surface are formed by using a deep drawing process.

5. A secondary battery, comprising:
a can including a first surface, a second surface, a third surface, a fourth surface, and a fifth surface with short sides and long sides respectively, a fifth surface connected to respective short sides of the first surface, the second surface, the third surface, and the fourth surface, and an opening opposite to the fifth surface;
a first hole formed on the fifth surface;
a first insulating member and a first terminal plate coupled to the first hole;
an electrode assembly placed in the can and connected to the first terminal plate;
a cap plate coupled to the opening; and
a second terminal plate connected to the electrode assembly and coupled onto the cap plate,
wherein the first surface, the second surface, the third surface, the fourth surface, and the fifth surface are integrally formed.

6. The secondary battery as claimed in claim 5, wherein the can is formed by using a deep drawing process.

7. The secondary battery as claimed in claim 5, further comprising:
a rivet coupled to the first hole,
wherein the rivet is rivet-coupled to the first insulating member and the first terminal plate.

8. The secondary battery as claimed in claim 5, further comprising:
a sub-plate assembly placed on one end of the electrode assembly,
wherein the electrode assembly is connected to the first terminal plate through the sub-plate assembly.

9. The secondary battery as claimed in claim 8, wherein the sub-plate assembly includes a sub-plate, and a current collector coupled onto the sub-plate, and wherein the current collector includes a protrusion contacting the first terminal plate.

10. A manufacturing method of a secondary battery, the method comprising:
forming integrally a can including a first surface, a second surface, a third surface, and a fourth surface with short sides and long sides respectively, a fifth surface connected to respective short sides of the first surface, the second surface, the third surface, and the fourth surface, and an opening opposite to the fifth surface;
forming a first hole on the fifth surface; and
assembling a first insulating member and a first terminal plate on the first hole.

11. The method as claimed in claim 10, wherein the first surface and the second surface face each other,
wherein the third surface and the fourth surface face each other, and
wherein a length of a short side of the first surface is smaller than a length of a short side of the third surface.

12. The method as claimed in claim 11, further comprising:
forming a vent hole on the first surface.

13. The method as claimed in claim 12, wherein the forming of the vent hole is performed before the forming of the first hole.

14. The method as claimed in claim 10, further comprising:
inserting an electrode assembly into the can.

15. The method as claimed in claim 14, further comprising a sub-plate assembly placed on one end of the electrode assembly and connected to the first terminal plate.

16. The method as claimed in claim 10, further comprising:
coupling a cap assembly to the opening of the can.

17. The method as claimed in claim 16, wherein the cap assembly includes a cap plate coupled to the opening, a second insulating member and a second terminal plate assembled onto the cap plate.

18. The method as claimed in claim 10, wherein the can is formed by a deep drawing process.

19. The method as claimed in claim 10, the assembling of the first insulating member and the first terminal plate to the first hole comprises,
placing a rivet on the first hole,
rivet-coupling the rivet to the first insulating member, and
rivet-coupling the rivet to the first terminal plate.

20. The method as claimed in claim 15, wherein the first terminal plate and the sub-plate assembly are coupled by welding.
